# EUROPEAN PATENT SPECIFICATION

(11) **EP 2 712 689 B1**
(45) Date of publication and mention of the grant of the patent: **30.09.2020**
(21) Application number: 13185967.0
(22) Date of filing: 25.09.2013
(51) Int. Cl.: B21D 43/05, F16H 19/06, B21D 43/18, B25J 18/02, B65G 47/91, F16M 11/26

(54) **Telescopic linear handling module**
Teleskopisches Linearhandhabungsmodul
Module de manipulation linéaire téléscopique

(30) Priority: 26.09.2012 IT TO20120162 U
(43) Date of publication of application: 02.04.2014
(73) Proprietor: ROLLON S.p.A., 20871 Vimercate (Monza e Brianza) (IT)
(72) Inventor: Laurenti, Gilberto, I-10093 COLLEGNO (Torino) (IT); Cerrato, Fabio, I-10141 TORINO (IT)
(74) Representative: Leihkauf, Steffen Falk

(56) References cited:
- EP-A2- 0 930 110
- WO-A1-2007/082748
- WO-A1-2010/002044
- DE-A1-102010 025 686
- FR-A1- 2 875 162
- FR-A1- 2 907 440

## Description

The present invention refers to a telescopic linear handling device, intended for example to handle pieces from one machine to another in a working line, such as a line for forming sheet metal parts.

The known telescopic linear handling devices typically comprise at least one pair of elongated elements, which are coupled to each other so as to be slidable relative to each other along a straight direction of movement parallel to their longitudinal axis, and an actuating unit arranged to control the telescopic movement of the elongated elements along the aforesaid direction of movement. According to the prior art, the elongated elements are made as extruded sections, typically of aluminium, or as steel sections welded to each other, and for this reason they typically have a high weight and large sizes, which entail, in addition to other problems, problems of high powers required to the actuating unit, and hence high consumptions, and problems of dynamic control of the handling devices, due to the high inertia involved.

A telescopic linear handling device according to the preamble of independent claim 1 is known from FR 2 907 440 A1. Such a known device is configured to move loads in the vertical direction only and, therefore, is not able to move pieces from one machine to another in a working line.

It is an object of the present invention to provide a telescopic linear handling device which is not affected by the above-identified problems of the prior art, and which is in particular compact and light.

This object is fully achieved according to the invention by virtue of a telescopic linear handling device having the features set forth in the enclosed independent claim 1.

Preferred embodiments of the invention are the subject-matter of the dependent claims, the content of which is to be regarded as an integral and integrating part of the following description.

By virtue of the use of sections of folded sheet metal, instead of aluminium extruded sections or steel sections welded to each other, the elongated elements of the telescopic linear handling device according to the invention have a lower weight and take up less space than the prior art, and allow therefore to obtain a handling device which is extremely light and compact.

The sections of folded and/or formed sheet metal of the elongated elements have a channel-shaped cross-section, with a substantially flat base wall, preferably having a plurality of holes to further decrease the overall weight of the handling device, and with a pair of substantially flat side walls, extending substantially perpendicular to the base wall, the base wall of the first elongated element being wider than that of the second elongated element so as to allow to arrange the second elongated element inside the first one.

Further features and advantages of the present invention will become apparent from the following detailed description, given purely by way of non-limiting example with reference to the appended drawings, in which:
Figures 1 and 2 are perspective views from above of a telescopic linear handling device according to an embodiment of the present invention, in the retracted position and in the fully extracted position, respectively;
Figure 3 is a cut-away perspective view of the device of Figures 1 and 2, in the fully extracted position;
Figure 4 is a perspective view from below of the device of Figures 1 and 2, in the fully extracted position; and
Figure 5 is a front elevation view of the device of Figures 1 and 2.

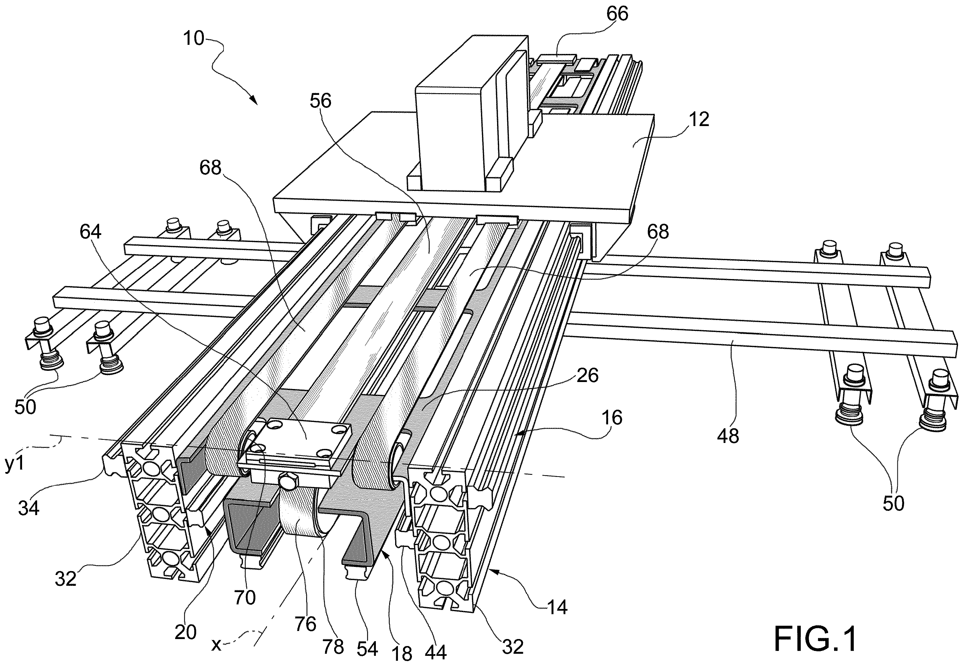

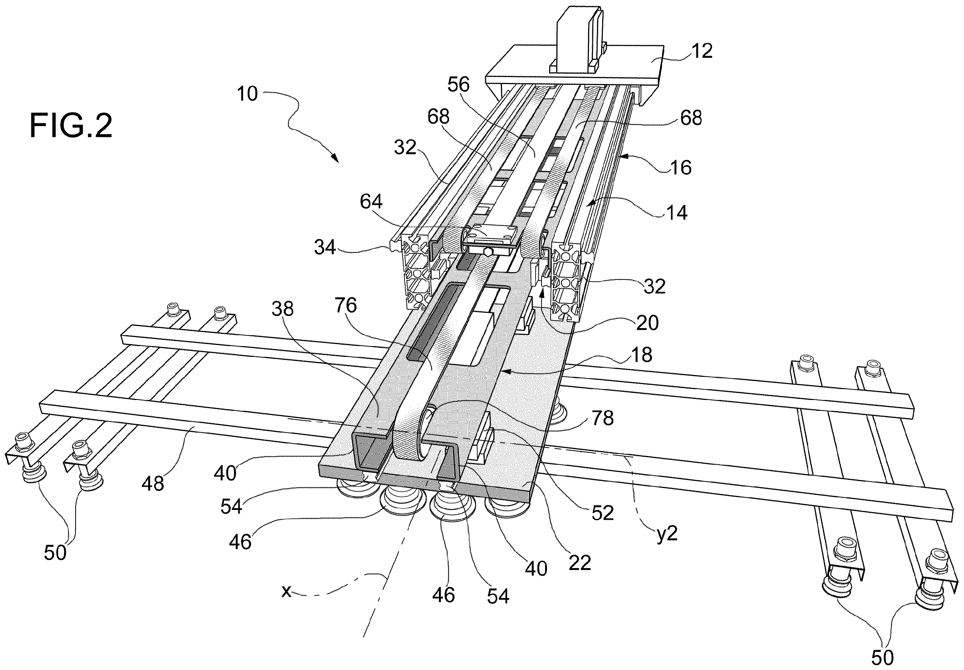

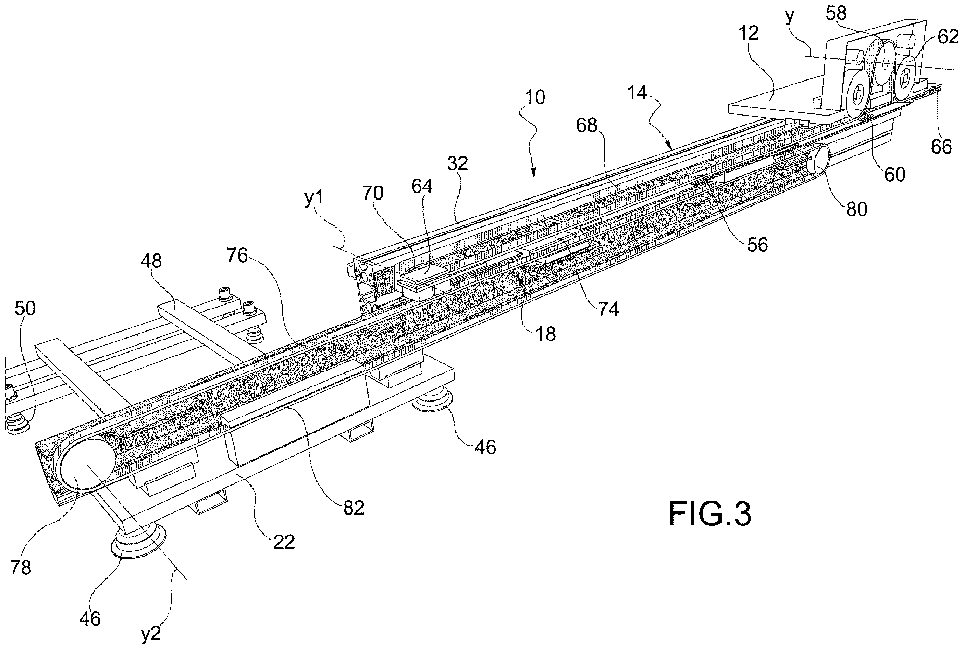

With reference to the drawings, a telescopic linear handling device (hereinafter referred to simply as handling device) for controlling a linear movement along a direction of movement x is generally indicated 10 and basically comprises:
a support structure 12, which in the illustrated embodiment consists merely of a plate having for example a rectangular shape;
a first elongated element 14, which extends parallel to the direction of movement x and is carried by the support structure 12 by means of a first pair of rectilinear guides 16 so as to slide relative to the support structure 12 along the direction of movement x;
a second elongated element 18, which extends parallel to the direction of movement x and is coupled to the first elongated element 14 by means of a second pair of rectilinear guides 20 so as to slide relative to the first elongated element 14 along the direction of movement x;
a carriage 22 carried by the second elongated element 18 by means of a third pair of rectilinear guides 24 so as to slide relative to the second elongated element 18 along the direction of movement x; and
an actuating unit arranged to control the telescopic movement of the two elongated elements 14 and 18 and of the carriage 22 along the direction of movement x between a retracted position (Figure 1), in which the carriage 22 is substantially aligned with the support structure 12, and a fully extracted position (Figures 2 and 3), in which the carriage 22 is at a maximum distance from the support structure 12, on either side of this latter.

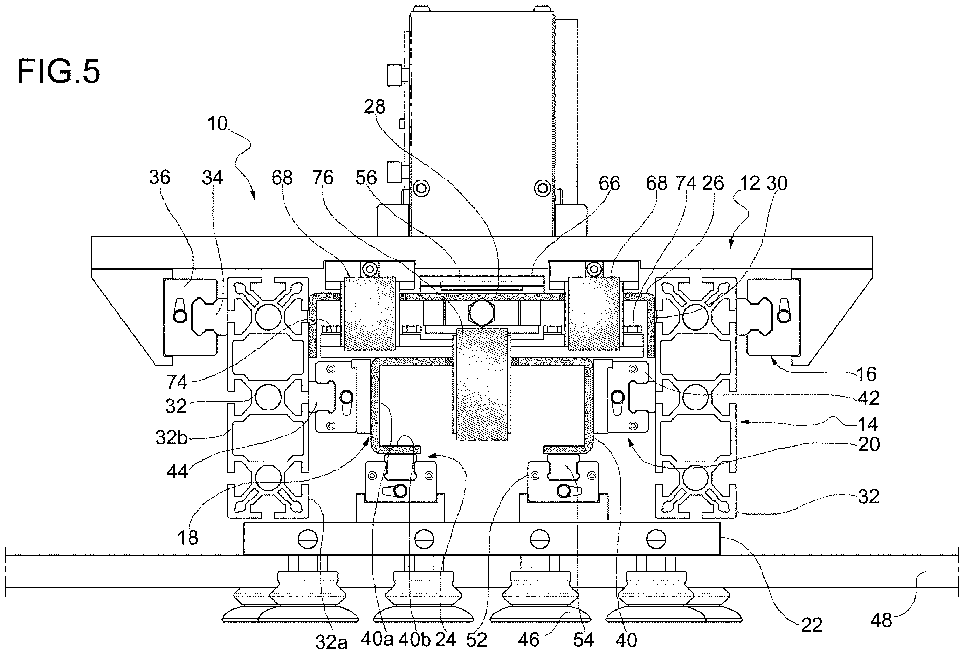

As can be seen in particular from the front elevation view of Figure 5, the first elongated element 14 comprises a middle section 26 of folded and/or formed sheet metal, in particular of high-strength steel, having an open cross-section, in particular an inverted channel-shaped cross-section, with a substantially flat base wall 28 and with a pair of substantially flat side walls 30 that extend downwards substantially perpendicular to the base wall 28. Preferably, in order to further decrease the overall weight of the handling device, the base wall 28 has a plurality of holes, which are for example made by laser piercing. The first elongated element 14 further comprises a pair of side sections 32, preferably identical to each other, which are fixed each to a respective side wall 30 and project downwards with respect to this latter. Preferably, the side sections 32 are made as aluminium extruded sections. Preferably, the side sections 32 have substantially the same length as the middle section 26. Preferably, the side sections 32 have a rectangular cross-section elongated in the vertical direction, with a vertical face 32a that faces towards the inside of the first elongated element 14, i.e. towards the respective side wall 30 of the middle section 26, and abuts against this latter, and with a vertical face 32b that faces towards the opposite side, i.e. towards the outside of the first elongated element 14. Tracks 34 are fixed to the vertical faces 32b of the two side sections 32 and extend throughout the first elongated element 14. A respective shoe 36 is slidably mounted on each track 34 and is fixed to the support structure 12, the tracks 34 and the shoes 36 thus forming the rectilinear guides 16 by means of which the first elongated element 14 is carried by the support structure 12 so as to slide relative to this latter along the direction of movement x.

Still with reference in particular to Figure 5, the second elongated element 18 is a section wholly made of folded and/or formed sheet metal, in particular of high-strength steel, having an open cross-section, in particular an inverted channel-shaped cross-section, with a substantially flat base wall 38 and with a pair of side walls 40 extending downwards from the base wall 38. Preferably, in order to further reduce the overall weight of the handling device, the base wall 38 has a plurality of holes, which are for example made by laser piercing. Preferably, the side walls 40 have an L-shaped cross-section, with a wall portion 40a substantially vertical, i.e. substantially perpendicular to the base wall 38, and with a wall portion 40b substantially horizontal, i.e. substantially parallel to the base wall 38. The second elongated element 18 is placed inside the first elongated element 14, and to this end the base wall 28 of the first elongated element 14 is wider than the base wall 38 of the second elongated element 18. Respective shoes 42 are fixed to the wall portions 40a of the second elongated element 18. The shoes 42 slidably engage with respective tracks 44 which are fixed to the vertical faces 32a of the first elongated element 14 and extend throughout this latter, the shoes 42 and the tracks 44 thus forming the rectilinear guides 20 by means of which the second elongated element 18 is coupled to the first elongated element 14 so as to slide relative to this latter along the direction of movement x.

In the illustrated embodiment, the carriage 22 is made as a plate element extending parallel to the base walls 28 and 38 of the first elongated element 14 and of the second elongated element 18, respectively, beneath the side sections 32 of the first elongated element 14. In the illustrated embodiment, the carriage 22 acts as a gripping member and to this end it is provided on its bottom face of a plurality of suction pads 46. An auxiliary frame 48 provided with additional suction pads 50 may also be fixed to the carriage 22. A pair of shoes 52 are fixed onto the top face of the carriage 22, i.e. on the face facing towards the second elongated element 18. The shoes 52 slidably engage in respective tracks 54 which are fixed to the wall portions 40b of the second elongated element 18 and extend throughout this latter, the shoes 52 and the tracks 54 thus forming the rectilinear guides 24 by means of which the carriage 22 is carried by the second elongated element 18 so as to slide relative to this latter along the direction of movement x.

With reference in particular to Figure 3, the actuating unit includes a motor unit (not shown), such as for example an electric gear motor, which is mounted on the support structure 12 and is adapted to generate a rotary motion about an axis of rotation y perpendicular to the direction of movement x, a first motion transmission device for converting the rotary motion generated by the motor unit about the axis of rotation y into a translational motion of the first elongated element 14 along the direction of movement x relative to the support structure 12 in either direction, a second motion transmission device for transmitting the translational motion along the direction of movement x from the first elongated element 14 to the second elongated element 18 in the same direction as the first elongated element 14 and a third motion transmission device for transmitting the translational motion along the direction of movement x from the second elongated element 18 to the carriage 22 in the same direction as the two elongated elements 14 and 18.

The first motion transmission device comprises a belt 56 (or an equivalent flexible transmission member) which is wound with an omega-shaped path around a driving pulley 58 driven to rotate by the motor unit about the axis of rotation y and around a pair of guide pulleys 60 and 62 mounted on opposite sides of the upper section 12 with respect to the driving pulley 58. The belt 56 is secured at its ends to a pair of fixing members 64 and 66 that are placed at the opposite ends of the first elongated element 14 and are secured thereto, whereby the belt 56 pulls with it the first elongated element 14 when it is driven by the motor unit. By properly controlling the motor unit, the first elongated element 14 may therefore be moved relative to the support structure 12 along the direction of movement x from a retracted starting position, shown in Figure 1, to a fully extracted position in one direction, as shown in Figures 2 and 3, or to a fully extracted position in the opposite direction (not shown).

The second motion transmission device comprises a pair of belts 68 (or equivalent flexible transmission members) which are wound each around a respective pair of guide pulleys 70 and 72 idly mounted at the opposite ends of the first elongated element 14 about respective axes of rotation y1 parallel to the axis of rotation y. The belts 68 are placed on laterally opposite sides of the belt 56 of the first motion transmission device. Each belt 68 is fixed to the second elongated element 18, by means of a respective fixing member 74 secured to the base wall 38 of that element, in a point/portion of its lower pass that in the retracted position of the handling device is in the middle between the axes of rotation y1 of the guide pulleys 70 and 72.

The third motion transmission device comprises a belt 76 (or equivalent flexible transmission member) wound around a pair of guide pulleys 78 and 80 idly mounted at the opposite ends of the second elongated element 18 about respective axes of rotation y2 parallel to the axis of rotation y. The belt 76 is vertically aligned with the belt 56 of the first motion transmission device. The belt 76 is fixed to the carriage 22, by means of a respective fixing member 82 secured to the same carriage, in a point/portion of its lower pass that in the retracted position of the handling device is in the middle between the axes of rotation y2 of the guide pulleys 78 and 80.

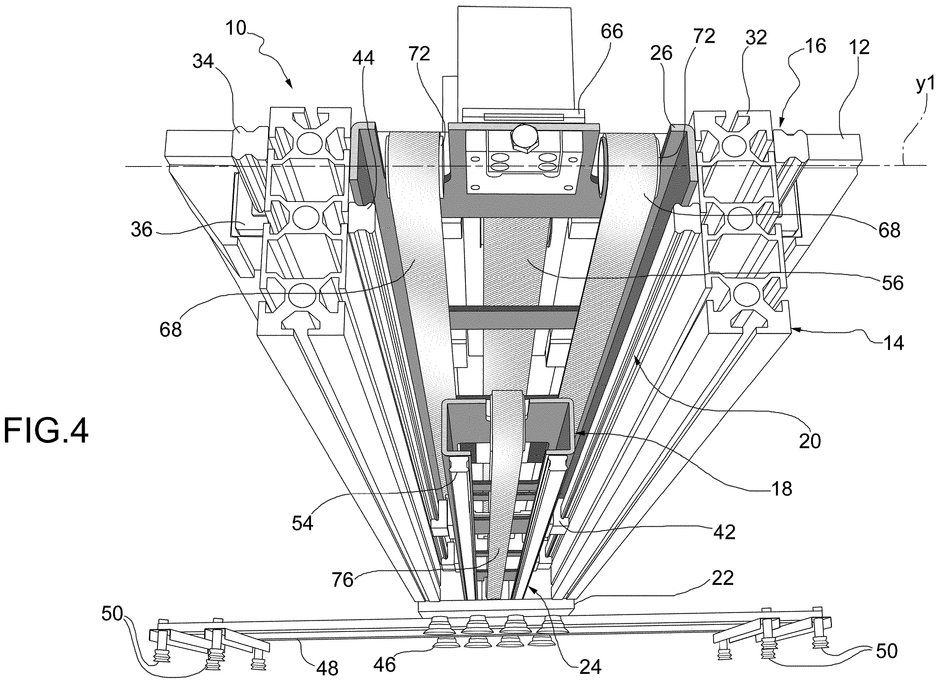

The connection between the motor unit, the first elongated element 14, the second elongated element 18 and the carriage 22 via the first, second and third motion transmission devices described above allows to obtain, by controlling with the motor unit the rotation of the driving pulley in either direction, starting from the retracted position of the handling device shown in Figure 1, a simultaneous translational movement in either direction of all the three movable elements of the handling device, i.e. the first elongated element 14, the second elongated element 18 and the carriage 22, until the fully extracted position shown in Figures 2, 3 and 4 is reached.

As will be easily understandable in the light of the above description and of the appended drawings, by virtue of the first and second elongated elements being made at least partially of folded and/or formed sheet metal, and in particular by virtue of these elements comprising, or consisting of, a sheet metal section with an open cross-section, for example with a channel-shaped cross-section, a handling device is obtained which is extremely light and compact.

Naturally, the principle of the invention remaining unchanged, the embodiments and the constructional details may vary widely from those described and illustrated purely by way of non-limiting example, without thereby departing from the scope of the invention as defined in the attached claims.

## Claims

1. Telescopic linear handling device (10) for controlling a linear movement along a direction of movement (x), the handling device (10) comprising:
a support structure (12),
a first elongated element (14), which extends parallel to the direction of movement (x) and is carried by the support structure (12) by means of first guide means (16) so as to slide relative to the support structure (12) along the direction of movement (x),
a second elongated element (18), which extends parallel to the direction of movement (x) and is coupled to the first elongated element (14) by means of second guide means (20) so as to slide relative to the first elongated element (14) along the direction of movement (x),
a carriage (22) carried by the second elongated element (18) by means of third guide means (24) so as to slide relative to the second elongated element (18) along the direction of movement (x), and
an actuating unit (56, 58, 68, 76) arranged to control the telescopic movement of the first elongated element (14), of the second elongated element (18) and of the carriage (22) along the direction of movement (x) between a retracted position and a fully extracted position, wherein the actuating unit (56, 58, 68, 76) comprises a motor unit which is mounted on the support structure (12) and is arranged to generate a rotary motion about an axis of rotation (y) perpendicular to the direction of movement (x),
wherein the first elongated element (14) and the second elongated element (18) are made at least partially of folded and/or formed sheet metal,
wherein the first elongated element (14) and the second elongated element (18) comprise each a respective section (26) of folded and/or formed sheet metal having an open cross-section,
wherein the sections (26) of folded and/or formed sheet metal of the first and second elongated elements (14, 18) have each a channel-shaped cross-section, with a substantially flat base wall (28, 38) and with a pair of substantially flat side walls (30, 40) extending substantially perpendicular to the base wall, and
wherein the base wall (28) of the section (26) of folded and/or formed sheet metal of the first elongated element (14) is wider than the base wall (38) of the section of folded and/or formed sheet metal of the second elongated element (18), the second elongated element (18) being placed inside the first elongated element (14),
**characterized in that** the actuating unit (56, 58, 68, 76) further comprises a first motion transmission device (56, 58) arranged to convert the rotary motion generated by the motor unit about the axis of rotation (y) into a translational motion of the first elongated element (14) along the direction of movement (x) relative to the support structure (12) in either direction, a second motion transmission device (68) arranged to transmit the translational motion along the direction of movement (x) from the first elongated element (14) to the second elongated element (18) in the same direction as the first elongated element (14), and a third motion transmission device (76) arranged to transmit the translational motion along the direction of movement (x) from the second elongated element (18) to the carriage (22) in the same direction as the first and second elongated elements (14, 18).

2. Device according to claim 1, wherein the first elongated element (14) comprises, in addition to the section (26) of folded and/or formed sheet metal, a pair of side sections (32) which are fixed each to a respective side wall (30) of the section (26) of folded and/or formed sheet metal, and wherein the second elongated element (18) is placed between the side sections (32) of the first elongated element (14).

3. Device according to claim 2, wherein the side sections (32) of the first elongated element (14) are extruded sections.

4. Device according to claim 2 or claim 3, wherein said first guide means (16) comprise first tracks (34) fixed to the side sections (32) of the first elongated element (14) and first shoes (36) fixed to the support structure (12), each first shoe (36) being slidably coupled to a respective first track (34) along the direction of movement (x).

5. Device according to any of claims 2 to 4, wherein said second guide means (20) comprise second tracks (44) fixed to the side sections (32) of the first elongated element (14) and second shoes (42) fixed to the side walls (40) of the section of folded and/or formed sheet metal of the second elongated element (18), each second shoe (42) being slidably coupled to a respective second track (44) along the direction of movement (x).

6. Device according to any of claims 2 to 5, wherein said third guide means (24) comprise third tracks (54) fixed to the section of folded and/or formed sheet metal of the second elongated element (18) and third shoes (52) fixed to the carriage (22), each third shoe (52) being slidably coupled to a respective third track (54) along the direction of movement (x).

## Patentansprüche

1. Teleskopische lineare Handhabungsvorrichtung (10) zum Steuern einer linearen Bewegung entlang einer Bewegungsrichtung (x), wobei die Handhabungsrichtung (10) umfasst:
eine Halterungsstruktur (12),
ein erstes längliches Element (14), welches sich parallel zu der Bewegungsrichtung (x) erstreckt und durch die Halterungsstruktur (12) mittels erster Führungsmittel (16) getragen ist, um entlang der Bewegungsrichtung (x) relativ zu der Halterungsstruktur (12) zu gleiten,
ein zweites längliches Element (18), welches sich parallel zu der Bewegungsrichtung (x) erstreckt und mittels zweiter Führungsmittel (20) mit dem ersten länglichen Element (14) gekoppelt ist, um entlang der Bewegungsrichtung (x) relativ zu dem ersten länglichen Element (14) zu gleiten,
einen Schlitten (22), welcher durch das zweite längliche Element (18) mittels dritter Führungsmittel (24) getragen ist, um entlang der Bewegungsrichtung (x) relativ zu dem zweiten länglichen Element (18) zu gleiten, und
eine Betätigungseinheit (56, 58, 68, 76), welche dazu eingerichtet ist, die teleskopische Bewegung des ersten länglichen Elements (14), des zweiten länglichen Elements (18) und des Schlittens (22) entlang der Bewegungsrichtung (x) zwischen einer eingefahrenen Position und einer vollständig ausgefahrenen Position zu steuern, wobei die Betätigungseinheit (56, 58, 68, 76) eine Motoreinheit umfasst, welche an der Halterungsstruktur (12) montiert ist und dazu eingerichtet ist, eine Drehbewegung um eine Drehachse (y) orthogonal zu der Bewegungsrichtung (x) zu erzeugen,
wobei das erste längliche Element (14) und das zweite längliche Element (18) wenigstens teilweise aus einem gefalteten und/oder geformten Metallblech hergestellt sind,
wobei das erste längliche Element (14) und das zweite längliche Element (18) jeweils einen entsprechenden Abschnitt (26) aus gefaltetem und/oder geformtem Metallblech umfassen, welcher einer offenen Querschnitt aufweist,
wobei die Abschnitte (26) aus gefaltetem und/oder geformtem Metallblech des ersten und des zweiten länglichen Elements (14, 18) jeweils einen kanalförmigen Querschnitt mit einer im Wesentlichen ebenen Basiswand (28, 38) und mit einem Paar im Wesentlichen ebener Seitenwände (30, 40) aufweisen, welche sich im Wesentlichen orthogonal zu der Basiswand erstrecken, und
wobei die Basiswand (28) des Abschnitts (26) aus gefaltetem und/oder geformtem Metallblech des ersten länglichen Elements (14) breiter als die Basiswand (38) des Abschnitts aus gefaltetem und/oder geformtem Metallblech des zweiten länglichen Elements (18) ist, wobei das zweite längliche Element (18) innerhalb des ersten länglichen Elements (14) platziert ist,
**dadurch gekennzeichnet, dass** die Betätigungseinheit (56, 58, 68, 76) ferner eine erste Bewegungsübertragungsvorrichtung (56, 58), welche dazu eingerichtet ist, die durch die Motoreinheit um die Drehachse (y) erzeugte Drehbewegung in eine translatorische Bewegung des ersten länglichen Elements (14) entlang der Bewegungsrichtung (x) relativ zu der Halterungsstruktur (12) in beide Richtungen umzuwandeln, eine zweite Bewegungsübertragungsvorrichtung (68), welche dazu eingerichtet ist, die translatorische Bewegung entlang der Bewegungsrichtung (x) von dem ersten länglichen Element (14) auf das zweite längliche Element (18) in der gleichen Richtung wie das erste längliche Element (14) zu übertragen, und eine dritte Bewegungsübertragungsvorrichtung (76) umfasst, welche dazu eingerichtet ist, die translatorische Bewegung entlang der Bewegungsrichtung (x) von dem zweiten länglichen Element (18) auf den Schlitten (22) in der gleichen Richtung wie das erste und das zweite längliche Element (14, 18) zu übertragen.

2. Vorrichtung nach Anspruch 1, wobei das erste längliche Element (14), zusätzlich zu dem Abschnitt (26) aus gefaltetem und/oder geformtem Metallblech, ein paar seitlicher Abschnitte (32) umfasst, welche jeweils an einer entsprechenden Seitenwand (30) des Abschnitts (26) aus gefaltetem und/oder geformtem Metallblech fixiert sind, und wobei das zweite längliche Element (18) zwischen den seitlichen Abschnitten (32) des ersten länglichen Elements (14) platziert ist.

3. Vorrichtung nach Anspruch 2, wobei die seitlichen Abschnitte (32) des ersten länglichen Elements (14) extrudierte Abschnitte sind.

4. Vorrichtung nach Anspruch 2 oder Anspruch 3, wobei die ersten Führungsmittel (16) erste Bahnen (34), welche an den seitlichen Abschnitten (32) des ersten länglichen Elements (14) fixiert sind, und erste Schuhe (36) umfassen, welche an der Halterungsstruktur (12) fixiert sind, wobei jeder erste Schuh (36) mit einer entsprechenden ersten Bahn (34) entlang der Bewegungsrichtung (x) gleitbar gekoppelt ist.

5. Vorrichtung nach einem der Ansprüche 2 bis 4, wobei die zweiten Führungsmittel (20) zweite Bahnen (44), welche an den seitlichen Abschnitten (32) des ersten länglichen Elements (14) fixiert sind, und zweite Schuhe (42) umfassen, welche an den Seitenwänden (40) des Abschnitts aus gefaltetem und/oder geformtem Metallblech des zweiten länglichen Elements (18) fixiert sind, wobei jeder zweite Schuh (42) mit einer entsprechenden zweiten Bahn (44) entlang der Bewegungsrichtung (x) gleitbar gekoppelt ist.

6. Vorrichtung nach einem der Ansprüche 2 bis 5, wobei die dritten Führungsmittel (24) dritte Bahnen (54), welche an dem Abschnitt aus gefaltetem und/oder geformtem Metallblech des zweiten länglichen Elements (18) fixiert sind, und dritte Schuhe (52) umfassen, welche an dem Schlitten (22) fixiert sind, wobei jeder dritte Schuh (52) mit einer entsprechenden dritten Bahnen (54) entlang der Bewegungsrichtung (x) gleitbar gekoppelt ist.

## Revendications

1. Dispositif de manutention linéaire télescopique (10) pour commander un mouvement linéaire selon une direction de déplacement (x), le dispositif de manutention (10) comprenant :
une structure de support (12),
un premier élément allongé (14), qui s'étend parallèlement à la direction de déplacement (x) et est porté par la structure de support (12) au moyen de premiers moyens de guidage (16) de manière à coulisser par rapport à la structure de support (12) le long de la direction de déplacement (x),
un second élément allongé (18), qui s'étend parallèlement à la direction de déplacement (x) et est couplé au premier élément allongé (14) au moyen de deuxièmes moyens de guidage (20) de manière à coulisser par rapport au premier élément allongé (14) le long de la direction de déplacement (x),
un chariot (22) porté par le second élément allongé (18) au moyen de troisièmes moyens de guidage (24) de manière à coulisser par rapport au second élément allongé (18) le long de la direction de déplacement (x), et
une unité d'actionnement (56, 58, 68, 76) conçue pour commander le mouvement télescopique du premier élément allongé (14), du second élément allongé (18) et du chariot (22) le long de la direction de déplacement (x) entre une position rétractée et une position complètement extraite, dans lequel l'unité d'actionnement (56, 58, 68, 76) comprend une unité de moteur qui est montée sur la structure de support (12) et est conçue pour générer un mouvement de rotation autour d'un axe de rotation (y) perpendiculaire à la direction de déplacement (x),
dans lequel le premier élément allongé (14) et le second élément allongé (18) sont réalisés au moins partiellement en tôle métallique pliée et/ou formée,
dans lequel le premier élément allongé (14) et le second élément allongé (18) comprennent chacun une section respective (26) de tôle métallique pliée et/ou formée ayant une coupe transversale ouverte,
dans lequel les sections (26) de tôle métallique pliée et/ou formée des premier et second éléments allongés (14, 18) ont chacune une coupe transversale en forme de canal, avec une paroi de base sensiblement plate (28, 38) et avec une paire de parois latérales sensiblement plates (30, 40) s'étendant sensiblement perpendiculairement à la paroi de base, et
dans lequel la paroi de base (28) de la section (26) de tôle métallique pliée et/ou formée du premier élément allongé (14) est plus large que la paroi de base (38) de la section de tôle métallique pliée et/ou formée du second élément allongé (18), le second élément allongé (18) étant placé à l'intérieur du premier élément allongé (14),
**caractérisé en ce que** l'unité d'actionnement (56, 58, 68, 76) comprend en outre un premier dispositif de transmission de mouvement (56, 58) conçu pour convertir le mouvement de rotation généré par l'unité de moteur autour de l'axe de rotation (y) en un mouvement de translation du premier élément allongé (14) le long de la direction de déplacement (x) par rapport à la structure de support (12) dans l'une ou l'autre direction, un deuxième dispositif de transmission de mouvement (68) conçu pour transmettre le mouvement de translation le long de la direction de déplacement (x) du premier élément allongé (14) au second élément allongé (18) dans la même direction que le premier élément allongé (14), et un troisième dispositif de transmission de mouvement (76) conçu pour transmettre le mouvement de translation le long de la direction de déplacement (x) du second élément allongé (18) au chariot (22) dans la même direction que les premier et second éléments allongés (14, 18).

2. Dispositif selon la revendication 1, dans lequel le premier élément allongé (14) comprend, en plus de la section (26) de tôle métallique pliée et/ou formée, une paire de sections latérales (32) qui sont fixées chacune à une paroi latérale (30) respective de la section (26) de tôle métallique pliée et/ou formée, et dans lequel le second élément allongé (18) est placé entre les sections latérales (32) du premier élément allongé (14).

3. Dispositif selon la revendication 2, dans lequel les sections latérales (32) du premier élément allongé (14) sont des sections extrudées.

4. Dispositif selon la revendication 2 ou la revendication 3, dans lequel lesdits premiers moyens de guidage (16) comprennent des premiers rails (34) fixés aux sections latérales (32) du premier élément allongé (14) et des premiers patins (36) fixés à la structure de support (12), chaque premier patin (36) étant couplé de manière coulissante à un premier rail respectif (34) le long de la direction de déplacement (x).

5. Dispositif selon l'une quelconque des revendications 2 à 4, dans lequel lesdits deuxièmes moyens de guidage (20) comprennent des deuxièmes rails (44) fixés aux sections latérales (32) du premier élément allongé (14) et des deuxièmes patins (42) fixés aux parois latérales (40) de la section de tôle métallique pliée et/ou formée du second élément allongé (18), chaque deuxième patin (42) étant couplé de manière coulissante à un deuxième rail respectif (44) le long de la direction de déplacement (x).

6. Dispositif selon l'une quelconque des revendications 2 à 5, dans lequel lesdits troisièmes moyens de guidage (24) comprennent des troisièmes rails (54) fixés à la section de tôle métallique pliée et/ou formée du second élément allongé (18) et des troisièmes patins (52) fixés au chariot (22), chaque troisième patin (52) étant couplé de manière coulissante à un troisième rail respectif (54) le long de la direction de déplacement (x).
